# EUROPEAN PATENT SPECIFICATION

(11) **EP 3 613 558 B1**
(45) Date of publication and mention of the grant of the patent: **20.07.2022**
(21) Application number: 19188730.6
(22) Date of filing: 27.07.2019
(51) Int. Cl.: B29C 64/118, B29C 64/209, B29C 64/321, B29C 64/393, B33Y 40/00, B29C 64/35

(54) **METHOD FOR AUTOMATIC CLEARING PRINT HEAD OF THREE-DIMENSIONAL PRINTING DEVICE**
VERFAHREN ZUM AUTOMATISCHEN LÖSCHEN EINES DRUCKKOPFES EINER DREIDIMENSIONALEN DRUCKVORRICHTUNG
PROCÉDÉ DE DÉGAGEMENT AUTOMATIQUE DE LA TÊTE D'IMPRESSION D'UN DISPOSITIF D'IMPRESSION TRIDIMENSIONNELLE

(30) Priority: 22.08.2018 PL 42674918
(43) Date of publication of application: 26.02.2020
(73) Proprietor: 3D Gence Spólka Z Ograniczona Odpowiedzialnoscia, 40-085 Katowice (PL)
(72) Inventor: Wolnicki, Przemyslaw, 42-100 Klobuck (PL); Turzynski, Filip, 81-741 Sopot (PL); Kostrzewa, Szymon, 05-622 Belsk Duzy (PL); Wilk, Krzysztof, 41-400 Myslowice (PL)
(74) Representative: AOMB Polska Sp. z.o.o.

(56) References cited:
- WO-A2-2014/153535
- CN-A- 107 498 853
- US-A1- 2016 052 208

## Description

### Technical field

The present invention relates to a method for automatic clearing, by which it is also meant cleaning or unblocking, a print head (an extruder or a material feed unit) of a three-dimensional printing device.

### Background art

The most common cause of errors in the three-dimensional printing process in the technology of fused filament fabrication are discontinuities in the extrusion of the printing material having usually the form of a filament wound onto the spool, so that the produced models may have defects negatively affecting their strength and visual quality. One reason for these defects are disruptions in the process of feeding the material due to contamination of the print head. These defects may result from the low quality of the filament used for the printing process, especially the variable diameter and dirt. Other reasons for defects may be the wear or contamination of the machine components, in particular the material feed system, the print head or the quantity measurement system of the extruded material.

In known method for clearing a print head errors and disturbances are detected by measuring the amount of extruded material, in particular based on force sensors, optical sensors and encoders. At the same time the value of a current flowing via a motor winding of a drive system feeding the material is measured, then the amount of the material actually fed is determined based on this value, and the amount of the material that is actually extruded and actually fed is compared. In the event of disturbance consisting of a different amount of material extruded and actually fed, the printing process stops and clearing the print head is carried out.

A solution is also known wherein the printing process stops automatically after detecting an error in extrusion by the system of measuring the amount of the extruded material. According to this method, the user can manually or semi-automatically remove the problem and continue the printing process without affecting the print quality.

In yet another known method employing more than one printing tool, after the error is detected by the system measuring the amount of extruded material, the material is automatically withdrawn, the printing tool is replaced and the printing process continues. This method is however effective only in the case where the problem with extrusion results from the wear or soiling of the printing tool.

In yet another known method, more than one feeding tray for a printing material is used. In this method, after the error is detected by the system for measuring the amount of extruded material, the material is automatically withdrawn, replaced with material from the second tray and the printing process continues. This solution is effective only in the case where the problem of extrusion is due to material defects.

US2016052208A1 discloses a method and apparatus for producing a multicomponent feedstock being delivered through a print head of a 3D printer in which multiple component lengths are produced from separate feedstocks and are aligned in a merger module to form the multicomponent feedstock which is fed into the print head for extrusion. In one of the steps a process for detecting a presence of a feedstock is carried out by a detection module to monitor the feedstock movement and provide information about feedstock production and/or consumption. This process however does not lead to unblocking or unclogging the print head, rather than to detection of the presence of the feedstock in order to ensure a closed loop feedback system leading to improved system performance and to proper guidance of the feedstock towards the drive module and the merger module.

WO 2014/143535 A2 shows the preamble of claim 1.

### Summary of the Invention

The objective of the present invention is to provide a method, as disclosed in claim 1, for clearing a print head after detecting an error using a single print head and a single material container without user intervention.

In a method according to the present invention, after detection of an error in a material feed system, an additional drive system for material feed is being actuated causing the printing material to flow firstly in the reverse direction and then in the forward direction. This subsequent flow of the material in the forward direction is fed with increasing speed from zero to a rated speed using a primary drive system and an auxiliary drive system. Preferably, after detection of an error, a measurement system measuring the amount of a material being fed is disengaged, and then after reaching a material feed rate in the range of 1% to 40% of the rated speed, the measurement system is re-actuated and the speed of feeding the material is being gradually increased up to 100% of the rated speed.

It is advantageous to disengage the measurement system immediately after detection of an error.

A method according to the invention allows removing the source of an error while keeping the quality of extrusion and resuming the printing process without user intervention by using an additional drive system for the material feed, and a cleaning process during which the direction and the speed of the material feed is being changed. The method of the invention may be used in conjunction with known methods for controlling the amount of the material to be extruded.

### Brief description of Drawing

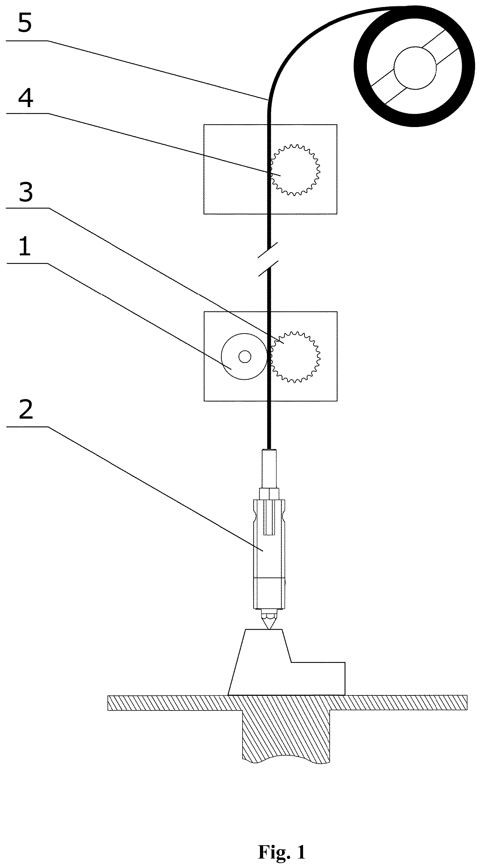

The method of present invention is further illustrated in the Drawing in which Fig. 1 shows a schematic diagram of a method according to the present invention.

### Detailed description of exemplary embodiments

First, defect in a material being fed is detected using a measuring system 1 for measuring the amount of the extruded material. Then the printing of a model stops and a print head 2 moves away from the print area, and the measuring system 1 switches off. After this, by means of a drive system 3 for feeding the printing material and of an auxiliary drive system 4 for the material feed, 1cm to 40cm of the printing material 5 is withdrawn, thereby creating a negative pressure in the print head 2 and the section of the printing material 3 cooperating with the drive system 3 is being retracted beyond this cooperation area. This is particularly important when, as a result of blocking the print head 2, the material has been cut off in the section cooperating with the drive system 3. The drive system 3 and the auxiliary drive system 4 are then brought forward and the printing material 5 is fed with increasing speed from zero to 40% of the rated speed. In this case, the pressure in the print head 2 is generated and the dirt is cleaned. Later, after the extrusion of at least 1 cm of the printing material 5, the measurement system 1 is switched on, and then the speed of the material feed is gradually increased until the rated speed is reached, and after it is reached, the auxiliary drive system 4 is disengaged. At the end it is checked if the measurement system 1 does not show any disturbance. If it does not, the process of clearing ends. If the measuring system 1 shows any disturbance, the process of cleaning is repeated.

The method according to the present invention can be also applied in situation when the continuity of the printing material feed in the drive system has been broken. It allows reduction of downtime of the three-dimensional printer.

The use of an additional drive system for the material feed allows obtaining high pressures in order to push dirt and degraded material out of a printing nozzle. Feeding the printing material in the additional section allows the material to be fed despite the lack of contact of the drive system 3 with the feeding material in the primary section.

The risk of a prolonged heating of the printing material being blocked in the print head is eliminated due to the material clearing process which takes place immediately after detection of an error in the extrusion process.

## Claims

1. A method for automatic clearing a print head (2) of a three-dimensional printer, in which a measuring system (1) measures the amount of an extruded printing material (5) fed per unit of time by a drive system (3) for feeding the printing material (5), wherein in the event of an error detected by the measuring system (1) based on the measurement of the amount of the extruded printing material (5), said error being reported as a blockage of the print head (2), **characterised in that** the printing material (5) is withdrawn and then re-fed, wherein in addition to the drive system (3) feeding the printing material (5), an additional drive system (4) for the material feed is used, said additional drive system (4) is being actuated after detection of the error, wherein after material withdrawal, the printing material (5) is fed again with increasing speed from zero to a rated speed using both drive systems (3,4).

2. A method according to claim 1, **wherein** the measuring system (1) is disengaged prior to re-feeding of the printing material (5), and then after reaching the speed in the range of 1% to 40% of the rated speed, the measuring system (1) is switched on again, and then speed of the material feed is gradually increased until 100% of the rated speed is reached.

3. A method according to claim 1 or 2, **wherein** the measuring system (1) is disconnected immediately upon detection of the error.

## Patentansprüche

1. Verfahren zum automatischen Reinigen eines Druckkopfes (2) eines dreidimensionalen Druckers, bei dem ein Messsystem (1) die von einem Antriebssystem (3) zum Zuführen des Druckmaterials (5) pro Zeiteinheit zugeführte Menge eines extrudierten Druckmaterials (5) misst,
wobei im Falle eines vom Messsystem (1) aufgrund der Messung der Menge des extrudierten Druckmaterials (5) erkannten Fehlers, der als Blockierung des Druckkopfes (2) gemeldet wird, **dadurch gekennzeichnet, dass** das Druckmaterial (5) abgezogen und anschließend wieder zugeführt wird, wobei
zusätzlich zu dem das Druckmaterial (5) zuführenden Antriebssystem (3) ein weiteres Antriebssystem (4) für die Druckmaterialzuführung verwendet wird, das nach Erkennen des Fehlers angesteuert wird, wobei nach der Materialentnahme das Druckmaterial (5) mit steigender Geschwindigkeit von Null auf eine Nenngeschwindigkeit unter Verwendung beider Antriebssysteme (3,4) erneut zugeführt wird.

2. Verfahren nach Anspruch 1, **wobei** das Messsystem (1) vor der erneuten Zuführung des Druckmaterials (5) abgeschaltet wird und dann nach Erreichen der Geschwindigkeit im Bereich von 1% bis 40% der Nenngeschwindigkeit das Messsystem (1) wieder eingeschaltet wird und dann die Geschwindigkeit der Materialzuführung schrittweise erhöht wird, bis 100% der Nenngeschwindigkeit erreicht sind.

3. Verfahren nach Anspruch 1 oder 2, **wobei** das Messsystem (1) unmittelbar nach Erkennen des Fehlers abgeschaltet wird.

## Revendications

1. Une méthode pour le nettoyage automatique d'une tête d'impression (2) d'une imprimante tridimensionnelle, dans laquelle un système de mesure (1) mesure la quantité d'un matériau d'impression (5) extrudé alimenté par unité de temps par un système d'entraînement (3) pour alimenter le matériau d'impression (5),
dans laquelle, en cas d'erreur détectée par le système de mesure (1) sur la base de la mesure de le montant du matériau d'impression (5) extrudé, ladite erreur étant rapportée comme un blocage de la tête d'impression (2), **caractérisée en ce que** le matériau d'impression (5) est retiré et ensuite réalimenté, dans laquelle
plus du système d'entraînement (3) alimentant le matériau d'impression (5), un système d'entraînement supplémentaire (4) pour l'alimentation en matériau est utilisé, ledit système d'entraînement supplémentaire (4) étant actionné après la détection de l'erreur, dans laquelle après le retrait du matériau, le matériau d'impression (5) est à nouveau alimenté avec une vitesse croissante de zéro à une vitesse nominale en utilisant les deux systèmes d'entraînement (3, 4).

2. Une méthode selon la revendication 1, **dans laquelle** le système de mesure (1) est désengagé avant la réalimentation du matériau d'impression (5), et puis, après avoir atteint la vitesse dans la plage de 1% à 40% de la vitesse nominale, le système de mesure (1) est remis en marche, puis la vitesse d'alimentation en matériau est progressivement augmentée jusqu'à atteindre 100% de la vitesse nominale.

3. Une méthode selon la revendication 1 ou 2, **dans laquelle** le système de mesure (1) est déconnecté immédiatement après la détection de l'erreur.
